# EUROPÄISCHE PATENTSCHRIFT

(11) **EP 1 238 002 B1**
(45) Veröffentlichungstag und Bekanntmachung des Hinweises auf die Patenterteilung: **12.09.2007**
(21) Anmeldenummer: 00975956.4
(22) Anmeldetag: 30.10.2000
(51) Int. Cl.: C08K 5/11, C08L 69/00, C08K 5/3475

(54) **POLYCARBONATFORMMASSEN**
POLYCARBONATE MOULDING COMPOUNDS
MATIERES MOULABLES EN POLYCARBONATE

(30) Priorität: 11.11.1999 DE 19954313
(43) Veröffentlichungstag der Anmeldung: 11.09.2002
(73) Patentinhaber: Bayer MaterialScience AG, 51368 Leverkusen (DE)
(72) Erfinder: GORNY, Rüdiger, 47800 Krefeld (DE); ANDERS, Siegfried, 51147 Köln (DE); NISING, Wolfgang, 53757 St. Augustin (DE)
(86) Internationale Anmeldenummer: PCT/EP2000/010656
(87) Internationale Veröffentlichungsnummer: WO 2001/034691

(56) Entgegenhaltungen:
- WO-A-96/06135
- WO-A-99/05205
- US-A- 4 097 435
- DATABASE CHEMICAL ABSTRACT [Online] chemical abstracts service columbus, ohio, US; UEMURA ET AL: retrieved from STN Database accession no. 130:238558 XP002161554 & JP 11 080387 A 26. März 1999 (1999-03-26)

## Beschreibung

Die Erfindung betrifft Polycarbonatformmassen und aus diesen Formmassen teilweise oder vollständig hergestellte Gegenstände, insbesondere Platten.

Polycarbonatplatten sind beispielsweise aus der EP-A 0 110 221 bekannt und werden für eine Vielzahl von Anwendungszwecken bereitgestellt. Die Herstellung erfolgt durch Extrusion von Polycarbonatformmassen und gegebenenfalls Coextrusion mit Polycarbonatformmassen, die einen erhöhten Anteil an UV-Absorbern enthalten.

Ein bei der Extrusion solcher Platten immer wieder auftretendes Problem ist das Absetzen flüchtiger Bestandteile aus der Formmasse am Kalibrator (bei Stegplatten) oder auf den Walzen (bei Massivplatten), die zu Oberflächenstörungen führen können. Flüchtige Bestandteile sind beispielsweise UV-Absorber, Entformungsmittel und andere niederflüchtige Nebenbestandteile.

Die EP-A 0 320 632 beschreibt coextrudierte Platten aus Polycarbonaten, die einen UV-Absorber enthalten und ein Gleitmittel enthalten können. Nachteilig ist, daß bei längerer Extrusionsdauer die Oberfläche der Platten durch Ausdampfungen aus der Polycarbonatschmelze, besonders bei der Coextrusion, nachteilig beeinflußt wird. Das vermehrte Ausdampfen des UV-Absorbers aus der Polycarbonatschmelze führt zur Belagbildung auf dem Kalibrator oder den Walzen und schließlich zur Bildung von Störungen der Plattenoberfläche, beispielsweise weiße Flecken und Welligkeit. Am Kalibrator kann außerdem der Polycarbonatabrieb zu pulverigen Ablagerungen auf den coextrudierten Polycarbonatplatten führen.

Die EP-A 0 649 724 beschreibt ein Verfahren zur Herstellung von mehrschichtigen Kunststofftafeln aus verzweigten Polycarbonaten mit Molmassen M̅_{w} von 27.000 bis 29.500 durch Coextrusion einer Kernschicht und mindestens einer Deckschicht mit 1 bis 15 Gew.% eines UV-Absorbers. Werden in den Formmassen zur Herstellung dieser Kunststofftafeln die in der EP-A 0 300 485 beschriebenen Entformungsmittel Glycerinmonostearat, Pentaerythrittetrastearat und deren Mischungen mit Glycerinmonostearat als Hauptkomponente eingesetzt, stellt sich mit der Zeit dennoch eine Verschlechterung der Oberflächen der Platten ein.

Der Erfindung liegt somit die Aufgabe zugrunde, Polycarbonatformmassen zur Plattenherstellung dahingehend zu optimieren, daß auch bei längerer kontinuierlicher Fahrweise die gute Qualität der Oberfläche der extrudierten Polycarbonatplatten beibehalten werden kann.

Gelöst wird diese Aufgabe durch Polycarbonatformmassen, die Verbindungen der allgemeinen Formel (I) 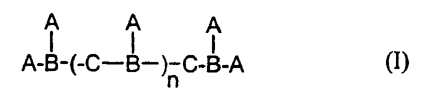 enthalten, worin
- A: ein C₁₀ bis C₄₀-Fettsäurerest, vorzugsweise C₂₂ bis C₃₄-Fettsäurerest,
- B: einen Rest abgeleitet von einem dreiwertigen Alkohol mit 3 bis 20, vorzugsweise 5 bis 10 Kohlenstoffatomen, besonders bevorzugt den Trimethylolpropan-Rest bedeutet,
- C: ein Dicarbonsäurerest mit 4 bis 40, vorzugsweise 5 bis 10, Kohlenstoffatomen und
- n: eine ganze Zahl von 0 bis 15 bedeutet.

Diese Verbindungen sind im Handel erhältlich.

Die Verwendung dieser Verbindungen hat sich für Polycarbonatformmassen als besonders günstig erwiesen. Sie lassen sich problemlos mit Polycarbonaten verarbeiten und zeigen in den als Produkt erhaltenen Formkörpern keine Beeinträchtigungen. Überraschenderweise hat sich herausgestellt, daß bei Einsatz dieser Verbindungen als flüchtig bekannte Zusatzstoffe von Polycarbonatformmassen nicht mehr zu den zuvor beschriebenen Problemen führen.

Vorzugsweise kann die Konzentration der erfindungsgemäß einzusetzenden Verbindungen der Formel (I) in der Polycarbonatformmasse 0,02 bis 1 Gew.-%, insbesondere 0.05 bis 0,4 Gew.-%, bezogen auf das Gewicht der Formmasse, betragen.

Thermoplastische, aromatische Polycarbonate für die erfindungsgemäßen Formmassen oder die daraus herzustellenden Kunststoffplatten sind diejenigen, die auch bisher für diesen Zweck verwendet wurden. Dies sind Homopolycarbonate, Copolycarbonate und thermoplastische Polyestercarbonate. Sie haben mittlere Molekulargewichte M̅_{w} von 25.000 bis 40.000, vorzugsweise von 26.000 bis 36.000 und insbesondere von 28.000 bis 35.000, ermittelt durch Messung der relativen Lösungsviskosität in Dichlormethan oder in Mischungen gleicher Gewichtsmengen Phenol/o-Dichlorbenzol, geeicht durch Lichtstreuung.

Zur Herstellung von Polycarbonaten sei beispielhaft auf "Schnell", Chemistry and Physics of Polycarbonats, Polymer Reviews, Vol. 9, Interscience Publishers, New York, London, Sydney 1964, auf D.C. PREVORSEK, B.T. DEBONA and Y. KESTEN, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), auf D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 und schließlich auf Dres. U. Grigo, K. Kircher und P.R. Müller "Polycarbonate" in Becker/Braun, Kunststoff-Handbuch, Band 3/1, Polycarbonate, Polyacetale, Polyester. Celluloseester, Carl Hanser Verlag München, Wien 1992, Seiten 117-299 verwiesen. Die Herstellung erfolgt vorzugsweise nach dem Phasengrenzflächenverfahren oder dem Schmelze-umesterungsverfahren und wird beispielhaft an dem Phasengrenzflächenverfahren beschrieben.

Als Ausgangsverbindungen bevorzugt einzusetzende Verbindungen sind Bisphenole der allgemeinen Formel HO-Z-OH, worin Z ein divalenter organischer Rest mit 6 bis 30 Kohlenstoffatomen ist, der eine oder mehrere aromatische Gruppen enthält. Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis-(hydroxyphenyl)sulfone, Bis(hydroxyphenyl)ketone und α,α'-Bis(hydroxyphenyl)-di-isopropylbenzole gehören.

Besonders bevorzugte Bisphenole, die zu den vorgenannten Verbindungsgruppen gehören, sind Bisphenol-A, Tetraalkylbisphenol-A, 4,4-(meta-Phenylendiisopropyl) diphenol (Bisphenol M), 4,4-(para-Phenylendiisopropyl) diphenol, 1,1-Bis-(4-hydroxyphenyl)-3,3,5-trimethylcyclohexan (BP-TMC) sowie gegebenenfalls deren Gemische. Besonders bevorzugt sind Homopolycarbonate auf der Basis von Bisphenol-A und Copolycarbonate auf der Basis der Monomere Bisphenol-A und 1,1-Bis-(4-hydroxyphenyl)-3,3,5-trimethylcyclohexan. Die erfindungsgemäß einzusetzenden Bisphenolverbindungen werden mit Kohlensäureverbindungen, insbesondere Phosgen oder beim Schmelzeumesterungsprozeß Diphenylcarbonat oder Dimethylcarbonat, umgesetzt.

Polyestercarbonate werden durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Orthophthalsäure, Terephthalsäure, Isophthalsäure, 3,3'- oder 4,4'-Diphenyldicarbonsäure und Benzophenondicarbonsäuren. Ein Teil, bis zu 80 Mol-%, vorzugsweise von 20 bis 50 Mol-% der Carbonatgruppen in den Polycarbonaten können durch aromatische Dicarbonsäureester-Gruppen ersetzt sein.

Verwendete inerte organische Lösungsmittel sind beispielsweise Dichlormethan, die verschiedenen Dichlorethane und Chlorpropanverbindungen, Tetrachlormethan, Trichlormethan, Chlorbenzol und Chlortoluol, vorzugsweise werden Chlorbenzol und Dichlormethan oder deren Gemische eingesetzt.

Die Reaktion kann durch Katalysatoren wie tertiäre Amine, N-Alkylpiperidine oder Oniumsalze beschleunigt werden. Bevorzugt werden Tributylamin, Triethylamin und N-Ethylpiperidin verwendet. Wird zur Polycarbonatherstellung das Schmelzeumesterungsverfahren angewendet, können die in der DE-A 42 38 123 genannten Katalysatoren verwendet werden.

Die Polycarbonate können durch den Einsatz geringer Mengen Verzweiger bewußt und kontrolliert verzweigt werden. Geeignete Verzweiger sind beispielsweise Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan; Tri-(4-hydroxyphenyl)-phenylmethan; 2,2-Bis-[4,4-bis-(4-hydroxyphenyl)-cyclohexyl]propan; 2,4-Bis-(4-hydroxyphenyl-isopropyl)-phenol; 2,6-Bis-(2-hydroxy-5'-methyl-benzyl)-4-methylphenol; 2-(4-hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; α,α',α"-Tris-(4-hydroxyphenyl)-1,3,5-triisopropylbenzol; 2,4-Dihydroxybenzoesäure; Trimesinsäure; Cyanurchlorid, 3,3-Bis-(3-methyl-4-hydroxyphenyl)-2-oxo-2,3-dihydroindol; 1,4-Bis-(4',4"-dihydroxytriphenyl)-methyl)-benzol und insbesondere 1,1,1-Tri-(4-hydroxyphenyl)-ethan und 3,3-Bis-(3-methyl-4-hydroxyphenyl)-2-oxo-2,3-dihydroindol. Die gegebenenfalls mitzuverwendenden 0,005 bis 2 Mol-%, bezogen auf eingesetzte Diphenole, an Verzweigern oder Mischungen von Verzweigern, können mit den Diphenolen zusammen eingesetzt werden.

Geeignete Kettenabbrecher sind vorzugsweise Phenole wie Phenol, Alkylphenole wie Kresol und 4-tert.-Butylphenol, Chlorphenol, Bromphenol, Cumylphenol oder deren Mischungen. Besonders bevorzugt sind Phenol, 4-tert.-Butylphenol oder Cumylphenol. Kettenabbrecher und Verzweiger können als getrennte Lösung oder aber auch zusammen mit dem Bisphenolat der Synthese zugesetzt werden.

Zur Herstellung der Polycarbonate nach dem Phasengrenzflächenprozeß werden die Bisphenole in wäßriger alkalischer Phase, vorzugsweise Natronlauge, gelöst. Die gegebenenfalls zur Herstellung von Copolycarbonaten erforderlichen Kettenabbrecher werden in Mengen von 1,0 bis 20,0 Mol-% je Mol Bisphenol, in der wässrigen alkalischen Phase gelöst oder zu dieser in einer inerten organischen Phase in Substanz zugegeben. Anschließend wird Phosgen in den die übrigen Reaktionsbestandteile enthaltenden Mischer eingeleitet und die Polymerisation durchgeführt. Nach der Reaktion wird die organische, das Polycarbonat enthaltende Phase von der wäßrigen Phase getrennt, mehrmals gewaschen und das Polycarbonat anschließend isoliert. Die Herstellung der Polycarbonate nach dem Schmelzeumesterungsprozeß ist in DE 42 38 123 beispielhaft beschreiben.

Geeignete UV-Absorber, die in den erfindungsgemäßen Formmassen eingesetzt werden können, sind solche Verbindungen, die aufgrund ihres Absorptionsvermögens unterhalb 400 nm in der Lage sind, Polycarbonat wirksam vor UV-Licht zu schützen und ein Molekulargewicht von mehr als 370, vorzugsweise von 500 und mehr aufweisen. UV-Absorber können in einer Menge von 0,1 bis 15 Gew.-%, vorzugsweise 3 bis 8 Gew.%, bezogen auf das Gewicht der Formplatte, enthalten sein.

Geeignete UV-Absorber sind insbesondere die in der WO 99/05205 beschriebenen Verbindungen der Formel (II) 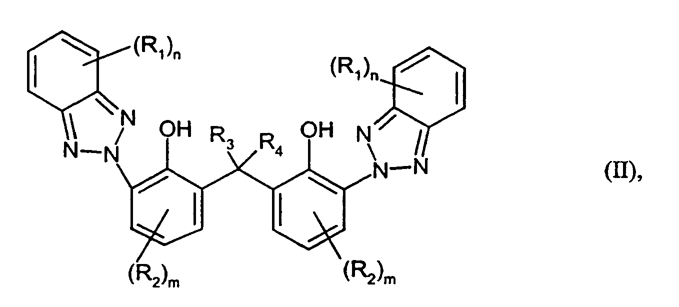 worin
- R¹ und R²: gleich oder verschieden sind und H, Halogen, C₁-C₁₀-Alkyl, C₅-C₁₀-Cycloalkyl, C₇-C₁₃-Aralkyl, C₆-C₁₄-Aryl, -OR⁵ oder -(CO)-O-R⁵ bedeuten mit
R⁵ = H oder C₁-C₄-Alkyl,
- R³ und R⁴: ebenfalls gleich oder verschieden sind und H, C₁-C₄-Alkyl, C₅-C₆-Cycloalkyl, Benzyl oder C₆-C₁₄-Aryl bedeuten,
- m: 1, 2 oder 3 ist und
- n: 1,2,3 oder 4 ist,
sowie solche der Formel (III) 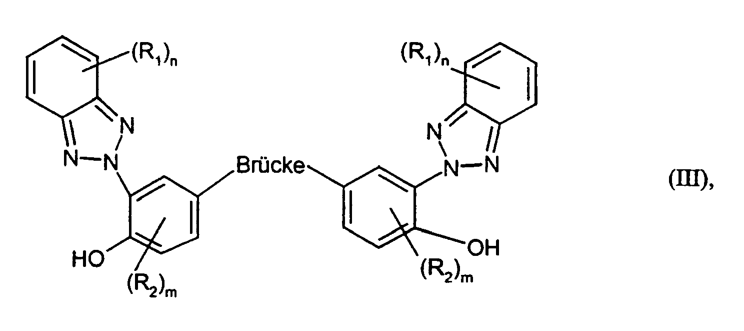 worin die Brücke 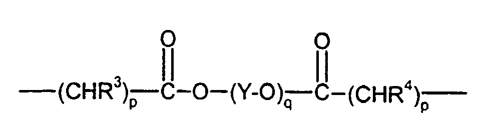 bedeutet,
R¹, R², m und n die für Formel (II) genannte Bedeutung haben,
worin außerdem p eine ganze Zahl von 0 bis 3 ist,
q eine ganze Zahl von 1 bis 10 ist,
Y -CH₂-CH₂-, -(CH₂)₃-, -(CH₂)₄-, -(CH₂)₅-, -(CH₂)₆-, oder CH(CH₃)-CH₂- ist und
R³ und R⁴ die für Formel (II) genannte Bedeutung haben.

Weitere geeignete UV-Absorber sind solche, die substituierte Triazine darstellen, wie das 2,4-Bis(2,4-dimethylphenyl)-6-(2-hydroxy-4-n-octyloxyphenyl)-1,3,5-triazin (CYASORB^{®} UV-1164) oder 2-(4,6-Diphenyl-1,3,5-triazin-2-yl)-5-(hexyl)oxyphenol (Tinuvin^{®} 1577). Besonders bevorzugt als UV-Absorber ist 2,2-Methylenbis-(4-(1,1,3,3-tetramethylbutyl)-6-(2H-benztriazol-2-yl)phenol), das im Handel unter der Bezeichnung Tinuvin® 360 oder Adeka Stab^{®} LA 31 vertrieben wird. Geeignet ist außerdem der nach der WO 96/15102, Beispiel 1 erhaltene UV-Absorber Uvinul® 3030 der Formel (IV) 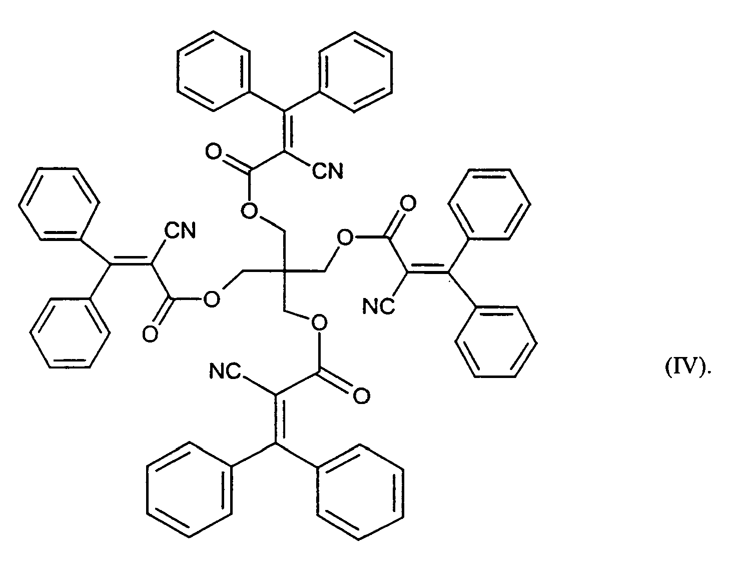 Geeignet sind außerdem die in EP-A 0500496 genannten UV-Absorber.

Geeignete Stabilisatoren für die Polycarbonate sind beispielsweise Phosphine, Phosphite oder Si enthaltende Stabilisatoren und weitere in der EP 0 500 496 A1 beschriebene Verbindungen. Beispielhaft seien Triphenylphosphin, Diphenylalkylphosphite, Phenyldialkylphosphite, Tris-(nonylphenyl)phosphit, Tetrakis-(2,4-di-tert.-butylphenyl)-4,4'-biphenylen-diphosponit und Triarylphosphit genannt. Besonders bevorzugt sind Triphenylphosphin und Tris-(2,4-di-tert.-butylphenyl)phosphit.

Ferner kann die erfindungsgemäße Formmasse Glycerinmonofettsäureester enthalten. Diese werden vorzugsweise in Mengen von 0,01 bis 1 Gew.-%, besonders bevorzugt 0,02 bis 0,3 Gew.-%, bezogen auf das Gewicht der Formmasse, eingesetzt. Glycerinmonofettsäureester sind Ester des Glycerins mit gesättigten, aliphatischen C₁₀ bis C₂₆-Monocarbonsäuren, vorzugsweise mit gesättigten, aliphatischen C₁₄ bis C₂₂-Monocarbonsäuren. Deren höhere Flüchtigkeit führt im Fall der erfindungsgemäßen Formmasse nicht mehr zu den eingangs beschriebenen Problemen.

Als Glycerinmonofettsäureester sind sowohl die der primären OH-Funktion des Glycerins als auch die der sekundären OH-Funktion des Glycerins zu verstehen sowie Mischungen dieser beiden isomeren Verbindungsklassen. Die Glycerinmonofettsäureester können herstellungsbedingt weniger als 50 % unterschiedliche Diester und Triester des Glycerins enthalten.

Gesättigte, aliphatische Monocarbonsäuren mit 10 bis 26 C-Atomen sind beispielsweise Caprinsäure, Laurinsäure, Myristinsäure, Palmitinsäure, Stearinsäure, Arachinsäure, Behensäure, Lignocerinsäure und Cerotinsäure.

Bevorzugte gesättigte, aliphatische Monocarbonsäuren mit 14 bis 22 C-Atomen sind beispielsweise Myristinsäure, Palmitinsäure, Stearinsäure, Arachinsäure und Behensäure.

Besonders bevorzugte gesättigte, aliphatische Monocarbonsäuren sind Palmitinsäure und Stearinsäure.

Die gesättigten, aliphatischen C₁₀-C₂₆-Carbonsäuren und die erfindungsgemäß einzusetzenden Glycerinmonofettsäureester sind als solche entweder literaturbekannt oder nach literaturbekannten Verfahren herstellbar (s. beispielsweise Fieser und Fieser, Organische Chemie GmbH, Weinheim, Bergstr. 1965, Kap. 30, Seite 1206 ff.). Beispiele für Glycerinmonofettsäureester sind die der besonders bevorzugten, vorstehend genannten Monocarbonsäuren.

Beispiele für Antistatika sind kationaktive Verbindungen, beispielsweise quartäre Ammonium-. Phosphonium- oder Sulfoniumsalze, anionaktive Verbindungen, beispielsweise Alkylsulfonate, Alkylsulfate, Alkylphosphate, Carboxylate in Form von Alkali- oder Erdalkalimetallsalzen, nichtionogene Verbindungen, beispielsweise Polyethylenglykolester, Polyethylenglykolether, Fettsäureester, ethoxylierte Fettamine. Bevorzugte Antistatika sind nichtionogene Verbindungen.

Weiterhin ist der Zusatz von Flammschutzmitteln, Pigmenten, Farbstoffen, fein verteilten Mineralien, optischen Aufhellern und anderen Additiven zu den Formmassen möglich.

Alle für die Synthese verwandten Einsatzstoffe und Lösungsmittel können aus ihrer Herstellung und Lagerung mit entsprechenden Verunreinigungen kontaminiert sein, wobei es das Ziel ist, mit so sauberen Ausgangsstoffen wie möglich zu arbeiten.

Das Vermischen der einzelnen Bestandteile kann in bekannter Weise sowohl sukzessive als auch simultan erfolgen und zwar sowohl bei Raumtemperatur als auch bei erhöhter Temperatur.

Die Einarbeitung der Zusätze in eine Formmasse erfolgt in bekannter Weise durch Vermischen von Polymergranulat mit den Zusätzen bei Temperaturen von etwa 200 bis 330°C in üblichen Aggregaten wie Innenknetem, Einschneckenextrudem und Doppelwellenextrudern, beispielsweise durch Schmelzcompoundierung oder Schmelzextrusion oder durch Vermischen der Lösungen des Polymers mit Lösungen der Additive und anschließende Verdampfung der Lösungsmittel in bekannter Weise. Der Anteil der Additive in der Formmasse kann in weiten Grenzen variiert werden und richtet sich nach den gewünschten Eigenschaften der Formmasse. Der Gesamtanteil der Additive in der Formmasse beträgt etwa bis zu 20 Gew.-%, vorzugsweise 0,1 bis 16 Gew.-%, bezogen auf das Gewicht der Formmasse.

Gegenstand der Erfindung sind ferner Formkörper, die teilweise oder vollständig aus den erfindungsgemäßen Formmassen hergestellt worden sind. Die Formmassen können zur Erzeugung von massiven Kunststoffplatten und Stegplatten (z.B. Stegmehrfachplatten) eingesetzt werden. Die Platten umfassen auch solche, die auf einer Seite oder beiden Seiten eine zusätzliche Deckschicht mit einem erhöhten UV-Absorbergehalt aufweisen.

Die erfindungsgemäßen Polycarbonatformmassen erlauben die erleichterte Herstellung von Polycarbonatformkörpern, insbesondere von Platten. Die Formmassen eignen sich sowohl für die Extrusion als auch zum Spritzguß. Durch Extrusion können Platten verschiedener Arten von Verscheibungen für z.B. Gewächshäuser, Wintergärten, Bushaltestellen, Reklametafeln, Schilder, Schutzscheiben, Automobilverscheibungen, Fenster, Überdachungen hergestellt werden.

Durch Spritzguß können Formkörper wie Formteile aller Art mit zum Teil komplizierter Struktur wie Gehäuse, Spulenkörper, Abdeckungen, Haushaltsgeräte hergestellt werden.

Nachträgliche Bearbeitungen, wie Tiefziehen oder Oberflächenbeareitungen, wie Ausrüstung mit Kratzfestlacken, wasserspreitenden Schichten und ähnliches sind möglich.

Die Erfindung wird durch das folgendes Beispiel weiter erläutert.

### Beispiel

10 mm Stegdoppelplatten A, B, C, D und E, wie sie beispielsweise in der EP-A 0 110 238 beschrieben sind, wurden aus folgenden Formmassen erhalten: Als Basismaterial wurde Makrolon^{®} KU1-1243 (verzweigtes BPA-PC der Bayer AG Leverkusen mit einem Schmelzflußindex (MFR) 6,5 g/(10 min) bei 300°C und 1,2 kg Belastung) verwendet.

Coextrudiert wurde dieses mit den in der Tabelle angegebenen Compounds auf Basis Makrolon^{®} 3100 (lineares BPA-PC der Bayer AG, Leverkusen mit einem MFR 6,5 g/(10 min) bei 300°C und 1,2 kg Belastung). Die Dicke der Coex-Schicht beträgt jeweils etwa 50 µm.

| **Platte** | **UV-Absorber** | **Entformungsmittel** | **Weitere Additive** |
|---|---|---|---|
| A | 5 % Tin360 | 0,25 % gemäß Erfindung*) | - |
| B | 5 % Tin360 | 0,1 % gemäß Erfindung*) | 0,05 % *² |
| C | 5 % Tin360 | 0,18 % gemäß Erfindung*) | 0,05 % *² |
| D | 5 % Tin360 | 0,1 % *¹ | 0,05 % *² |
| E | 5 % Tin360 | 0,25 % *¹ | - |

| | | | |
|---|---|---|---|
| *) im Handel erhältlich, z.B. Hostalub^{®} WE 40 (Produkt der Clariant GmbH, Frankfurt, Deutschland) ^{*1} Pentaerythrittetrastearat ^{*2} Glycerinmonostearat | | | |

An einem Coextrusionsadapter waren Extruder zur Erzeugung der Kernschicht und Deckschicht(en) angeschlossen. Der Adapter war so konstruiert, daß die die Deckschicht formende Schmelze als dünne Schicht haftend auf die Schmelze der Kernschicht aufgebracht wurde.

Die Einrichtung bestand aus
- dem Hauptextruder mit einer Schnecke der Länge 33D und einem Durchmesser von 70 mm mit Entgasung
- dem Coexadapter (Feedblocksystem)
- einem Coextruder zum Aufbringen der Deckschicht mit einer Schnecke der Länge 25D und einem Durchmesser von 30 mm
- der speziellen Breitschlitzdüse mit 350 mm Breite
- dem Kalibrator
- der Rollenbahn
- der Abzugseinrichtung
- der Ablängvorrichtung (Säge)
- dem Ablagetisch.

Das Polycarbonat-Granulat des Basismaterials wurde dem Fülltrichter des Hauptextruders zugeführt, das UV-Coextrusionsmaterial dem des Coextruders. Im jeweiligen Plastifiziersystem Zylinder/Schnecke erfolgte das Aufschmelzen und Fördern des jeweiligen Materials. Beide Materialschmelzen wurden im Coexadapter zusammengeführt und bildeten nach Verlassen der Düse und Abkühlen im Kalibrator einen Verbund. Die weiteren Einrichtungen dienten dem Transport, Ablängen und Ablegen der extrudierten Platten.

Die einfach beschichteten Kunststoffplatten wurden mit Hilfe obiger Einrichtungen nach dem Adapterverfahren kontinuierlich coextrudiert. Um eine Verformung des noch heißen Stegdoppelplattenstranges zu verhindern, wurde dieser nach Verlassen der Düse über einen Kalibrator geführt. Schließlich erfolgte der Zuschnitt auf die vorgegebene Plattenlänge.

### Coextrusion mit E (Referenz):

- erste kleinere Störungen nach 50 Minuten (Querwellen)
- nach 90 Minuten größere Störungen (Verwerfungen von Stegen, weiße Ablagerungen, Querwellen)
⇒ Note: schlecht

### Coextrusion mit D (Referenz):

- erste kleinere Störungen nach 90 Minuten (kleine, weiße Bläschen)
- nach 100 Minuten größere Störungen (Verwerfungen von Stegen, weiße Ablagerungen)
⇒ Note: befriedigend bis schlecht

### Coextrusion mit A:

- keine Ablagerungen auf der Platte über eine Versuchsdauer von 5 Stunden
- nach 110 Minuten in unregelmäßigen Abständen auftretende, leichte Querwellen, die die Plattenqualität negativ beeinflussen
⇒ Note: befriedigend

### Coextrusion mit B:

- Nach zwei Stunden sehr kleine, weiße Ablagerungen auf der Platte, die sich in halbstündigem Rhythmus wiederholen.
   Diese Ablagerungen haften nur sehr schlecht auf der Platte und können leicht entfernt werden.
- Die Plattenqualität wird nicht beeinflußt, vor allem weil keine Querwellen auftreten.
⇒ Note: gut

### Coextrusion mit C:

- Nach zwei Stunden sehr kleine, weiße Ablagerungen, die sich in halbstündigem Rhythmus wiederholen.
   Diese Ablagerungen haften nur sehr schlecht auf der Platte und können leicht entfernt werden.
- Die Plattenqualität wird nicht beeinflußt, vor allem weil keine Querwellen auftreten.
⇒ Note: gut

## Patentansprüche

1. Polycarbonatformmasse, die Verbindungen der allgemeinen Formel (I) 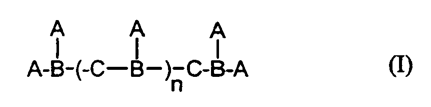 enthält, worin A ein C₁₀ bis C₄₀-Fettsäurerest, vorzugsweise C₂₂ bis C₃₄-Fettsäurerest, B ein dreiwertiger Alkohol mit 3 bis 20, vorzugsweise 5 bis 10, Kohlenstoffatomen, C ein Dicarbonsäurerest mit 4 bis 40, vorzugsweise 5 bis 10, Kohlenstoffatomen und n eine ganze Zahl von 0 bis 15 bedeutet.

2. Polycarbonatformmasse nach Anspruch 1, **dadurch gekennzeichnet, daß** die Konzentration der Verbindung der Formel (I) in der Polycarbonatformmasse 0,02 bis 1 Gew.-%, insbesondere 0,05 bis 0,4 Gew.-%, bezogen auf das Gewicht der Formasse, beträgt.

3. Polycarbonatformmasse nach einem der Ansprüche 1 oder 2, **dadurch gekennzeichnet, daß** die Formmasse zusätzlich 0,01 bis 1 Gew.-% eines Glycerinmonofettsäureesters mit einem Carbonsäurerest mit 10 bis 26 Kohlenstoffatomen enthält.

4. Polycarbonatformmasse nach Anspruch 3, **dadurch gekennzeichnet, daß** die Konzentration des Glycerinmonofettsäureesters 0,02 bis 0,3 Gew.-%, bezogen auf das Gewicht der Formmasse, beträgt.

5. Polycarbonatformmasse nach einem der vorangegangen Ansprüche, **dadurch gekennzeichnet, daß** die Formmasse 0,1 bis 15 Gew.-%, bezogen auf das Gewicht der Formmasse, UV-Absorber enthält.

6. Polycarbonatformmasse nach Anspruch 5, **dadurch gekennzeichnet, daß** der UV-Absorber ein 2-(4,6-Diphenyl-1,3,5-triazin-2-yl)-5-(hexyl)oxyphenol ist.

7. Polycarbonatformmasse nach Anspruch 5, **dadurch gekennzeichnet, daß** der UV-Absorber ein 2,2-Methylenbis-(4-(1,1,3,3-tetramethylbutyl)-6-(2H-benztriazol-2-yl)phenol) ist.

8. Polycarbonatformmasse nach Anspruch 5, **dadurch gekennzeichnet, daß** der UV-Absorber eine Verbindung der Formel (IV) 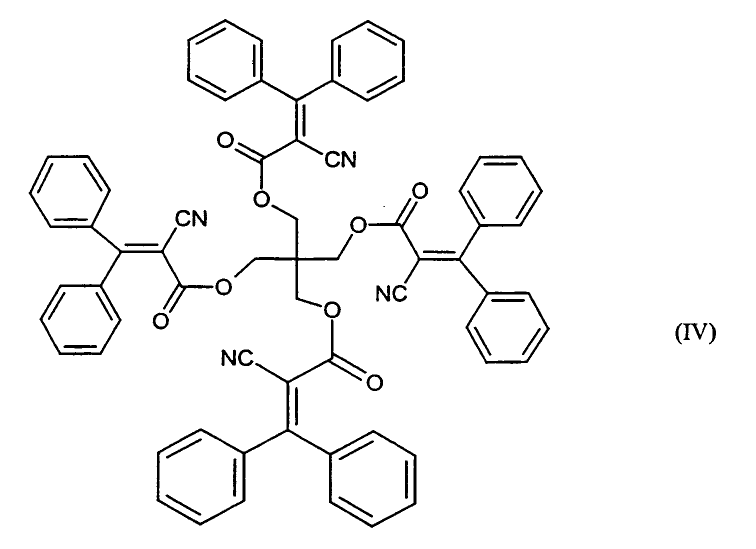 ist.

9. Polycarbonatformmasse nach einem der vorangegangenen Ansprüche, **dadurch gekennzeichnet, daß** die Formmasse 10 bis 3000 ppm Thermostabilisator(en) enthält.

10. Polycarbonatformmasse nach Anspruch 9, **dadurch gekennzeichnet, daß** der Thermostabilisator Tris-(2,4-di-tert.-butylphenyl)phosphit oder Triphenylphosphin ist.

11. Verfahren zur Herstellung von Polycarbonatformkörpern aus Polycarbonatformmassen nach einem der vorangegangenen Ansprüche durch Extrusion oder Spritzguß.

12. Verfahren zur Herstellung einer Deckschicht eines Polycarbonatformkörpers aus Polycarbonatformmasen anch einem der vorangegangenen Ansprüche durch Coextrusion.

13. Formkörper, der aus der Formmasse nach einem der Ansprüche 1 bis 10 erhältlich ist.

14. Formkörper, der mindestens eine Deckschicht enthält, die aus der Formmasse nach einem der Ansprüche 1 bis 10 erhältlich ist.

15. Formkörper nach Anspruch 14, **dadurch gekennzeichnet, daß** die Deckschicht auf einer Polycarbonat-Massivplatte oder einer Polycarbonat-Stegplatte angeordnet ist.

16. Formkörper nach Anspruch 14, **dadurch gekennzeichnet, daß** Deckschichten auf zwei sich gegenüberliegenden Seiten des Formkörpers angeordnet sind.

17. Formkörper nach Anspruch 15 oder 16, **dadurch gekennzeichnet, daß** die Polycarbonatplatte eine gewellte Platte ist.

18. Formkörper nach einem der Ansprüche 13 bis 17, **dadurch gekennzeichnet, daß** der Formkörper eine Verscheibung eines Gewächshauses, eines Wintergartens, einer Bushaltestelle, einer Reklametafel, eines Schilds, einer Schutzscheibe, eines Automobils, eines Fensters oder einer Überdachung ist.

## Claims

1. Polycarbonate moulding composition which comprises compounds of the general formula (I) 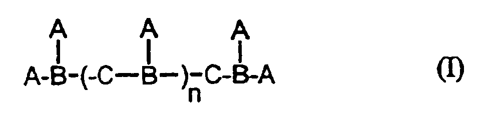 wherein A represents a C₁₀ to C₄₀-fatty acid radical, preferably C₂₂ to C₃₄-fatty acid radical, B represents a trivalent alcohol having 3 to 20, preferably 5 to 10 carbon atoms, C represents a dicarboxylic acid radical having 4 to 40, preferably 5 to 10 carbon atoms and n represents an integer from 0 to 15.

2. Polycarbonate moulding composition according to claim 1, **characterized in that** the concentration of the compound of the formula (I) in the polycarbonate moulding composition is 0.02 to 1 wt.%, in particular 0.05 to 0.4 wt.%, based on the weight of the moulding composition.

3. Polycarbonate moulding composition according to claim 1 or 2, **characterized in that** the moulding composition additionally comprises 0.01 to 1 wt.% of a glycerol mono-fatty acid ester with a carboxylic acid radical having 10 to 26 carbon atoms.

4. Polycarbonate moulding composition according to claim 3, **characterized in that** the concentration of the glycerol mono-fatty acid ester is 0.02 to 0.3 wt.%, based on the weight of the moulding composition.

5. Polycarbonate moulding composition according to any one of the preceding claims, **characterized in that** the moulding composition comprises 0.1 to 15 wt.%, based on the weight of the moulding composition, of UV absorber.

6. Polycarbonate moulding composition according to claim 5, **characterized in that** the UV absorber is 2-(4,6-diphenyl-1,3,5-triazin-2-yl)-5-(hexyl)oxyphenol.

7. Polycarbonate moulding composition according to claim 5, **characterized in that** the UV absorber is 2,2-methylenebis-(4-(1,1,3,3-tetramethylbutyl)-6-(2H-benzotriazol-2-yl)phenol).

8. Polycarbonate moulding composition according to claim 5, **characterized in that** the UV absorber is the compound of the formula (IV)

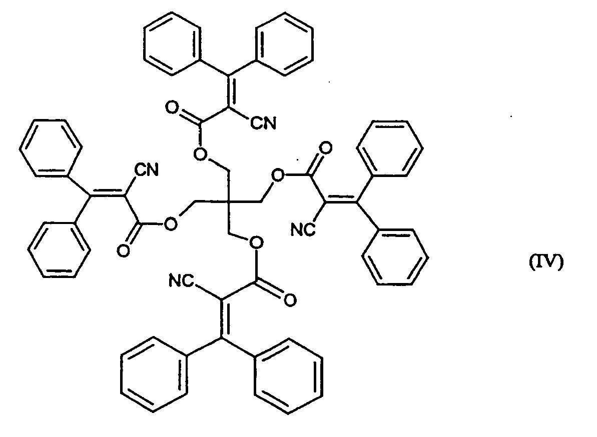

9. Polycarbonate moulding composition according to any one of the preceding claims, **characterized in that** the moulding composition comprises 10 to 3,000 ppm of heat stabilizer (s).

10. Polycarbonate moulding composition according to claim 9, **characterized in that** the heat stabilizer is tris-(2,4-di-tert.-butylphenyl) phosphite or triphenylphosphine.

11. Process for the production of polycarbonate shaped articles from polycarbonate moulding compositions according to any one of the preceding claims by extrusion or injection moulding.

12. Process for the production of a top layer of a polycarbonate shaped article from polycarbonate moulding compositions according to any one of the preceding claims by coextrusion.

13. Shaped article which is obtainable from the moulding composition according to any one of claims 1 to 10.

14. Shaped article which comprises at least one top layer which is obtainable from the moulding composition according to any one of claims 1 to 10.

15. Shaped article according to claim 14, **characterized in that** the top layer is arranged on a polycarbonate solid sheet or a polycarbonate multi-wall sheet.

16. Shaped article according to claim 14, **characterized in that** top layers are arranged on two opposite sides of the shaped article.

17. Shaped article according to claim 15 or 16, **characterized in that** the polycarbonate sheet is a corrugated sheet.

18. Shaped article according to any one of claims 13 to 17, **characterized in that** the shaped article is glazing of a greenhouse, a conservatory, a bus shelter, an advertising board, a sign, a protective screen, a car, a window or a roof.

## Revendications

1. Matière à mouler en polycarbonate contenant des composés de formule générale (I) 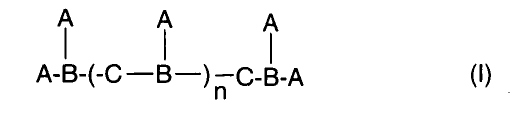 dans laquelle A représente un radical d'acide gras en C₁₀-C₄₀, de préférence un radical d'acide gras en C₂₂-C₃₄, B représente un alcool trivalent en C₃-C₂₀, de préférence en C₅-C₁₀, C représente un radical d'acide dicarboxylique contenant 4 à 40, de préférence 5 à 10 atomes de carbone et n est un nombre entier allant de 0 à 15.

2. Matière à mouler en polycarbonate selon la revendication 1, **caractérisée en ce que** la concentration du composé de formule (I) dans la matière à mouler en polycarbonate représente 0,02 à 1 %, plus spécialement 0,05 à 0,4 % du poids de la matière à mouler.

3. Matière à mouler en polycarbonate selon l'une des revendications 1 ou 2, **caractérisée en ce qu'**elle contient en outre 0,01 à 1 % en poids d'un monoester du glycérol et d'acide gras dont le radical acide carboxylique est en C₁₀-C₂₆.

4. Matière à mouler en polycarbonate selon la revendication 3, **caractérisée en ce que** la concentration du monoester du glycérol et d'acide gras est de 0,02 à 0,3 % du poids de la matière à mouler.

5. Matière à mouler en polycarbonate selon l'une des revendications qui précèdent, **caractérisée en ce qu'**elle contient 0,1 à 15 % de son poids d'absorbeurs d'UV.

6. Matière à mouler en polycarbonate selon la revendication 5, **caractérisée en ce que** l'absorbeur d'UV est un 2-(4,6-diphényl-1,3,5-triazin-2-yl)-5-(hexyl)oxyphénol.

7. Matière à mouler en polycarbonate selon la revendication 5, **caractérisée en ce que** l'absorbeur d'UV est un 2,2-méthylènebis-[4-(1,1,3,3-tétraméthylbutyl)-6-(2H-benzotriazol-2-yl)phénol].

8. Matière à mouler en polycarbonate selon la revendication 5, **caractérisée en ce que** l'absorbeur d'UV est un composé de formule (IV)

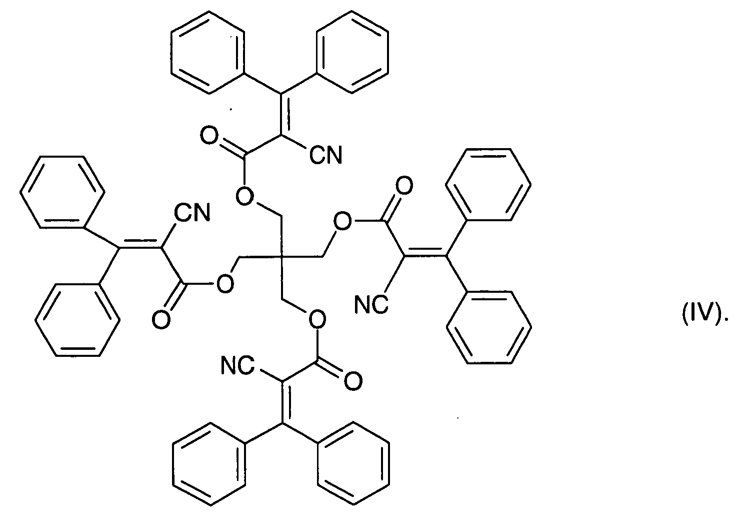

9. Matière à mouler en polycarbonate selon l'une des revendications qui précèdent, **caractérisée en ce qu'**elle contient de 10 à 3000 ppm d'un ou plusieurs stabilisants à la chaleur.

10. Matière à mouler en polycarbonate selon la revendication 9, **caractérisée en ce que** le stabilisant à la chaleur est le phosphate de tris-(2,4-di-tert.-butylphényle) ou la triphénylphosphine.

11. Procédé pour la fabrication d'objets moulés en polycarbonate à partir des matières à mouler en polycarbonate selon l'une des revendications qui précèdent par extrusion ou par moulage par injection.

12. Procédé pour appliquer une couche de couverture d'un corps moulé en polycarbonate à partir de matières à mouler en polycarbonate selon l'une des revendications qui précèdent par coextrusion.

13. Objets moulés obtenus à partir de la matière à mouler selon l'une des revendications 1 à 10.

14. Objets moulés portant au moins une couche de couverture obtenue à partir de la matière à mouler selon l'une des revendications 1 à 10.

15. Objets moulés selon la revendication 14, **caractérisés en ce que** la couche de couverture est appliquée sur une plaque massive en polycarbonate ou sur une plaque nervurée en polycarbonate.

16. Objets moulés selon la revendication 14, **caractérisés en ce que** des couches de couverture sont appliquées sur les deux faces opposées de l'objet moulé.

17. Objets moulés selon la revendication 15 ou 16, **caractérisés en ce que** la plaque de polycarbonate est une plaque ondulée.

18. Objets moulés selon l'une des revendications 13 à 17, **caractérisés en ce que** l'objet moulé est une vitre de serre, de jardin d'hiver, d'une halte d'autobus, d'un panneau publicitaire, d'une enseigne, d'un vitrage de protection, d'une automobile, d'une fenêtre ou d'un auvent.
